Europäisches Patentamt

European Patent Office

Office européen des brevets

(11) Veröffentlichungsnummer: **0 269 797**
**A1**

(12) **EUROPÄISCHE PATENTANMELDUNG**

(21) Anmeldenummer: 87113277.5

(22) Anmeldetag: **11.09.87**

(51) Int. Cl.4: **H02H 6/00** , H02H 7/085

(30) Priorität: **31.10.86 CH 4324/86**

(43) Veröffentlichungstag der Anmeldung:
**08.06.88 Patentblatt 88/23**

(84) Benannte Vertragsstaaten:
**DE FR GB IT SE**

(71) Anmelder: **Sprecher + Schuh AG**
**Buchserstrasse 7**
**CH-5001 Aarau(CH)**

(72) Erfinder: **Lassal, Said**
**Staldenacker 642**
**CH-5014 Gretzenbach(CH)**
Erfinder: **Muller, Gabriel**
**General Guisan Strasse 52**
**CH-5000 Aarau(CH)**

(74) Vertreter: **Morva, Tibor**
**Morva Patentdienste Hintere Vorstadt 34**
**Postfach**
**CH-5001 Aarau(CH)**

(54) **Elektronisches Motorschutzrelais.**

(57) Das elektronische Motorschutzrelais weist ein, die Erwärmung des zu schützenden Objektes (110) simulierendes Wärmeabbild (43) auf. Das normierte Eingangssignal UMN ist an den nichtinvertierenden Eingang des Operationsverstärkers (42) geführt, während der invertierende Eingang über den parallelgeschalteten Entladewiderstand (45) und Integrationskondensator (44, 50, 51) mit dem Ausgang des Operationsverstärkers (42) und über einen Stromquellenwiderstand (47) mit der negativen Speisespannung (OV) verbunden ist. Die Ausgangsspannung des Operationsverstärkers (42) ist proportional zur Erwärmung des zu schützenden Objektes, z.B. eines Motores (110). Erreicht diese Spannung einen vorgegebenen Wert, erfolgt eine Abschaltung.

Fig. 2

EP 0 269 797 A1

## Elektronisches Motorschutzrelais

Die vorliegende Erfindung betrifft ein elektronisches Motorschutzrelais mit verzögerter Auslösung mit einem, die Erwärmung des zu schützenden Objektes simulierenden Wärmeabbild mit einem Operationsverstärker und einer Parallelschaltung eines Integrationskodensators und eines Entladewiderstandes im Rückkopplungspfad an den invertierenden Eingang, das bei Erreichen eines Grenzwertes ein Auslösesignal abgibt.

Ein solches Motorschutzrelais ist beispielsweise aus der DE-AS 26 11 014 bekannt. Das Wärmeabbild dieses Motorschutzrelais wird durch einen Operationsverstärker gebildet, der im Rückkopplungspfad an den invertierenden Eingang eine Parallelschaltung von einem Kondensator und einem Entladewiderstand aufweist. Die ebenfalls an den invertierenden Eingang des Operationsverstärkers angelegte, dem grössten Phasenstrom proportionale Spannung,wird somit integriert, und bei einem bestimmten Strom-Zeitintegral gibt das nachgeschaltete Vergleichsglied ein Auslösesignal ab. Erwärmungsvorgänge, insbesondere bei geringer Ueberlastung des zu schützenden Gerätes, z.B. eines Motores, laufen in der Regel langsam ab. Ein genaues Wärmeabbild über lange Zeitdauer ist mit solchen Integrationsgliedern nur mit hochwertigen und somit teuren Komponenten oder speziellen Beschaltungen erreichbar.

Aufgabe der vorliegenden Erfindung ist es, ein elektronisches Motorschutzrelais vorzuschlagen, dessen Wärmeabbild einfach aufgebaut ist, über eine gute Langzeitabilität verfügt, auf verschiedene Zeitkonstanten eingestellt werden und auf einfache Weise getestet werden kann.

Diese Aufgabe wird erfindungsgemäss durch die Merkmale des kennzeichnenden Teils des Anspruches 1 gelöst. Bevorzugte Ausbildungen des Erfindungsgegenstandes sind in den weiteren Ansprüchen angegeben.

Die Wirkungsweise des erfindungsgemässen Motorschutzrelais wird anhand eines Ausführungsbeispiels beschrieben.

Fig. 1 zeigt die Speiseschaltungsanordnung eines zu überwachenden Motores,

Fig. 2 zeigt ein Schaltschema des erfindungsgemässen elektronischen Motorschutzrelais.

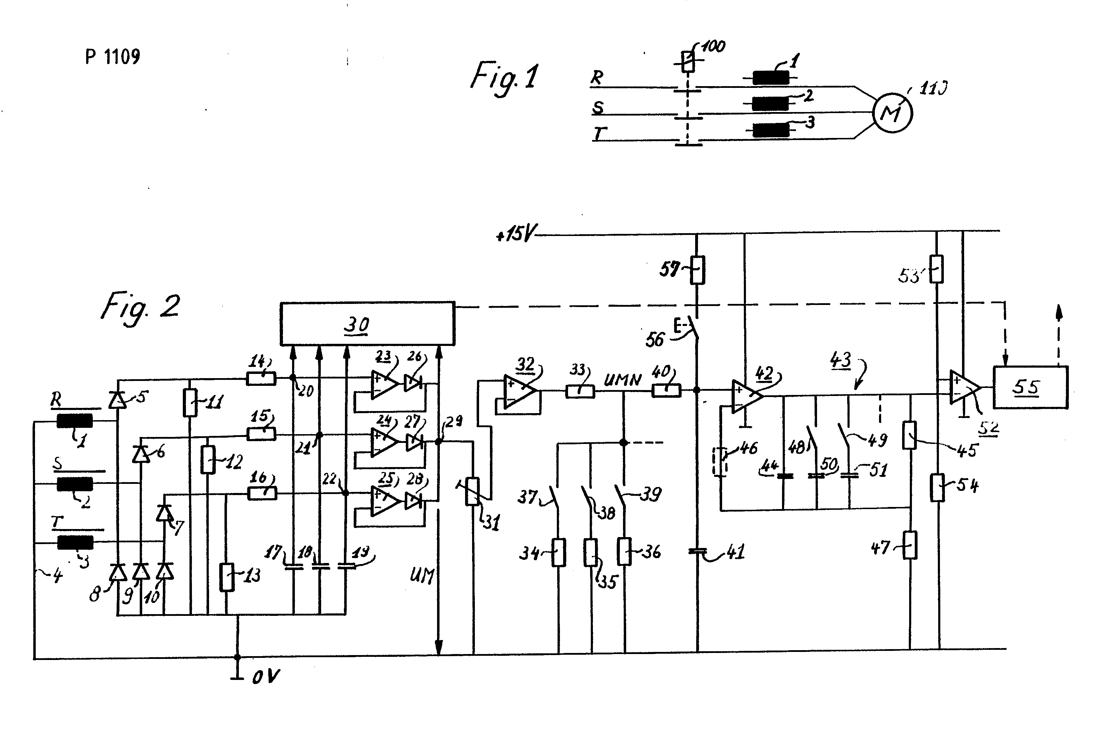

In der Fig. 1 ist der zu überwachende Motor mit 110 bezeichnet. Er wird durch die Phasenleiter RST gespeist, welche durch einen Leistungsunterbrecher 100, z.B. ein Schütz, an den Motor 110 elektrisch zu-und abschaltbar sind. Nur schematisch dargestellt sind die Stromwandler 1,2,3, mit denen die in den Phasenleitern R, S, T fliessenden Ströme erfasst werden. Das zu überwachende Gerät könnte auch ein Transformator oder eine andere auf Ueberstrom empfindliche Last sein.

In der Fig. 2 sind die beispielsweise einen elektrischen Motor speisenden Phasenleiter auch mit R, S, und T gezeichnet. Sie bilden gleichzeitig die Primärleiter der Stromwandler 1,2,3. Die Sekundärwicklungen der Stromwandler 1,2,3 sind einseitig zu einem Sternpunkt 4 verbunden, welcher ebenfalls mit dem 0-Volt Ausgang der Speisung in elektrischer Verbindung steht. Die zweiten Sekundäranschlüsse der Stromwandler 1,2,3 sind bei positiver Stromhalbwelle durch die Dioden 5,6,7 mit den Bürdewiderständen 11, 12, 13 elektrisch leitend verbunden, während bei negativer Stromhalbwelle die Sekundärkreise der Stromwandler 1, 2, 3 durch die Dioden 8, 9, 10 geschlossen sind. Die Bürdewiderstände 11, 12, 13 verbinden dabei die Kathoden der Dioden 5, 6, 7 mit dem Sternpunkt 4; die Anoden der Dioden 8, 9, 10 sind ebenfalls mit diesem Sternpunkt verbunden.

Ueber den Bürdewiderständen 11, 12, 13 fallen stromproportionale Spannungen ab, welche durch die Ladewiderstände 14, 15, 16 an die Glättungskondensatoren 17, 18, 19 geführt werden. An den Verbindun gspunkten 20, 21, 22 stehen folglich dem jeweiligen Spitzenwert der Phasenströme R, S, T proportionale Gleichspannungen zur Verfügung.

Diese Gleichspannungen sind je an die nichtinvertierenden Eingänge von Operationsverstärkern 23, 24, 25 geführt. An den Ausgängen der Operationsverstärker 23, 24, 25 sind die Anoden der Dioden 26, 27, 28 angeschlossen, deren Kathoden mit den invertierenden Eingängen der Operationsverstärker 23, 24, 25 und mit einem gemeinsamen Punkt 29 in elektrischer Verbindung stehen.

Am gemeinsamen Punkt 29 steht immer die dem grössten Phasenstrom R, S, T proportionale Gleichspannung UM an. Durch Vergleich dieser Spannung mit den Spannungen an den Verbindungspunkten 20, 21, 22 erfolgt auf einfache Weise, im mit 30 bezeichneten Rechteck, die Ueberwachung der Phasenströme R, S, T auf Phasenausfall oder Asymmetrie. Ein Teil der Spannung UM wird über einen einstellbaren Eichspannungsteiler 31 an den nichtinvertierenden Eingang eines weiteren Operationsverstärkers 32 mit Verstärkung 1 geführt.

Durch die Spannungsteilerschaltung 33...39 wird eine dem grössten Phasenstrom R, S, T proportionale, nominierte Spannung UMN erzeugt. Dies erfolgt durch wahlweises Parallelschalten von Widerständen 34, 35, 36 mit Hilfe der Wahlschalter 37, 38, 39 in Serie zum Widerstand 33. Wie gestrichelt angedeutet, können weitere parallelschaltbare Widerstände vorgesehen sein. Vorteilhafterweise sind die Widerstände 34, 35, 36... so abgestuft, dass die Spannung UMN entsprechend den Nennströmen von unterschiedlichen Motoren eingestellt werden kann.

Die auf dem Nennstrom der zu schützenden Last, z.B. Motor, nominierte Spannung UMN wird über den Widerstand 40 an den Testkondensator 41 und an den nichtinvertierenden Eingang des Operationsverstärkers 42 geführt. Der Testkondensator 41 unterdrückt kurzzeitige Ueber-und Unterspannungen und dient, wie weiter unten beschrieben, zum Eigentest des Motorschutzrelais.

Der Operationsverstärker 42 ist ein Teil des Wärmeabbildes 43, das die Erwärmung der Last simuliert. Der Ausgang des Operationsverstärkers 42 ist über mindestens einen Integrationskondensator 44 und einem parallelgeschalteten Entladewiderstand 45 and den invertierenden Eingang rückgekoppelt. Um Drifterscheinungen des Operationsverstärkers 42 auszugleichen, kann im Rückkopplungspfad zwischen dem parallelgeschalteten Integrationskondensator 44, Entladewiderstand 45 und dem invertierenden Eingang ein Kompensationswiderstand 46 geschaltet sein. Der oben beschriebene Rückkopplungspfad ist über einen Stromquellenwiderstand 47 mit dem 0-Volt Ausgang der Speisung verbunden. Die Spannung über diesem Stromquellenwiderstand 47 entspricht im wesentlichen der Spannung UMN; folglich muss der ihn durchfliessende Strom auch proportional zur Spannung UMN sein. Dieser Strom wird durch den Ausgang des Operationsverstärkers 42 geliefert und mittels dem Integrationskondensator 44 integriert. Die Entladung dieses Integrationskondensators 44 erfolgt durch den parallelgeschalteten Entladewiderstand 45.

Um die thermische Zeitkonstante des Wärmeabbildes 43 der wirklichen Zeitkonstante des zu schützenden Motores anzupassen, sind zum Integrationskondensator 44 mittels Schalter 48, 49 weitere Kondensatoren 50, 51 parallelschaltbar. Die Zeitkonstante $^T$ des Wärmeabbildes ist folglich $T = R_{45} \cdot C_{total}$, wobei $C_{total}$ die Summe der parallelgeschalteten Kondensatoren 44, 50, 51 bedeutet. Auch hier können weitere Kondensatoren vorgesehen sein, wie dies mit der gestrichelten Linie angedeutet ist.

Wird der Stromquellenwiderstand 47 viel kleiner gewählt als der Entladewiderstand 45, so ist die Ausgangsspannung des Operationsverstärkers 42 proportional zur Erwärmung des zu - schützenden Objektes. Durch Vergrösserung des Stromquellenwiderstandes 47 kann ein dem grössten Phasenstrom R, S, T proportionaler Spannungsanteil zur Spannung über dem Intergrationskondensator 44 addiert werden, so dass sich die Auslösekennlinie um diesen Anteil verschiebt.

Die Ausgangsspannung des Operationsverstärkers 42 ist an den invertierenden Eingang eines als Komparator arbeitenden Operationsverstärkers 52 geführt, dessen nichtinvertierende Eingangsspannung durch die Spannungsteilung 53, 54 gegeben ist. Die Spannungserteilung 53, 54 ist zwischen die stabilisierte Speisespannung 15V und dem 0-Volt Ausgang der Speisung geschaltet. Solange die Ausgangsspannung des Wärmeabbildes 43 kleiner ist als die durch die Spannungsteilung 53, 54 vorgegebene Referenzspannung, wird kein Auslösesignal abgegeben. Sobald die Ausgangsspannung des Wärmeabbildes 43 diese Referenzspannung aber übersteigt, gibt der Operationsverstärker 52 ein Auslösesignal an die Auslöseeinheit 55 ab, welche den in der Fig. 1 dargestellten Leistungsunterbrecher 100 abfallen lässt und den Motor 110 vor Ueberhitzung schützt.

Durch Betätigung der Test-Taste 56 wird der Testkondensator 41 über den Testwiderstand 57 aufgeladen. Sind alle Wahlschalter 37, 38, 39 geöffnet und fliesst in den Phasenleitern R, S, T kein Strom, so muss innerhalb einer vorbestimmten Zeitdauer eine Auslösung erfolgen. Die Zeitdauer ist dann abhängig von der im Wärmeabbild 43 eingestellten Zeitkonstante T.

## Ansprüche

1. Elektronisches Motorschutzrelais mit verzögerter Auslösung mit einem, die Erwärmung des zu schützenden Objektes simulierenden Wärmeabbild aus einem Oberationsverstärker und einer Parallelschaltung eines Integrationskondensators und eines Entladewiderstandes im Rückkopplungspfad an den invertierenden Eingang, das bei Erreichen eines Grenzwertes ein Auslösesignal abgibt, **dadurch gekennzeichnet, dass** ein normiertes Eingangssignal UMN an den nichtinvertierenden Eingang des Operationsverstärkers (42) geführt ist, der invertierende Eingang des Operationsverstärkers (42) über den parallelgeschalteten Entlade-Widerstand (45) und Integrationskondensators (44, 50, 51) mit dem Ausgang des Operationsverstärkers (42) und über einen Stromquellenwiderstand (47) mit der negativen Speisespannung (OV) verbunden ist.

2. Elektronisches Motorschutzrelais nach Anspruch 1, **dadurch gkennzeichnet, dass** zum Integrationskondensator (44) weitere Kondensatoren (50, 51) parallel schaltbar sind.

3. Elektronisches Motorschutzrelais nach Anspruch 1 oder 2, **dadurch gekennzeichnet, dass** zwischen dem invertierenden Eingang des Operationsverstärkers (42) und dem Verbindungspunkt des Entladewiderstandes (45) des Integrationskondensators 44 und des Stromquellenwiderstandes (47) ein Kompensationswiderstand (46) schaltbar ist.

4. Elektronisches Motorschutzrelais nach einem der Ansprüche 1 bis 3, **dadurch gekennzeichnet, dass** der nichtinvertierende Eingang des Operationsverstärkers (42) über einen Testkondensator 41 mit der negativen Speisespannung (OV) verbunden und über einen Ladewiderstand (57) mit der positiven Speisespannung verbindbar ist.

5. Elektronisches Motorschutzrelais nach einem der Ansprüche 1 bis 4, **dadurch gekennzeichnet, dass** der Entladewiderstand (45) 10 bis 300 mal grösser ist als der Stromquellewiderstand (47).

Fig. 1

Fig. 2

P 1109

0 269 797

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | EP-A-0 099 784 (MERLIN GERIN) <br> * Figur 1; Seite 4, Zeile 11 - Seite 5, Zeile 17 * <br> --- | 1 | H 02 H 6/00 <br> H 02 H 7/085 |
| Y | DE-B-1 170 061 (SIEMENS) <br> * Figur 1; Ansprüche 1,2 * <br> --- | 1 | |
| A | FR-A-2 343 349 (SIEMENS) <br> * Figur 1; Ansprüche 1,2 * <br> ----- | 1 | |

|  |  |
|---|---|
|  | RECHERCHIERTE SACHGEBIETE (Int. Cl.4) <br><br> H 02 H |

Der vorliegende Recherchenbericht wurde für alle Patentansprüche erstellt

| Recherchenort | Abschlußdatum der Recherche | Prüfer |
|---|---|---|
| DEN HAAG | 04-02-1988 | KOLBE W.H. |